# EUROPEAN PATENT SPECIFICATION

(11) **EP 1 562 863 B1**
(45) Date of publication and mention of the grant of the patent: **11.10.2006**
(21) Application number: 03773025.6
(22) Date of filing: 20.11.2003
(51) Int. Cl.: C02F 1/32

(54) **METHOD AND DEVICE FOR PURIFICATION OF A LIQUID**
VERFAHREN UND VORRICHTUNG ZUR REINIGUNGEINER FL SSIGKEIT
PROCEDE ET DISPOSITIF DE PURIFICATION D'UN LIQUIDE

(30) Priority: 22.11.2002 SE 0203470
(43) Date of publication of application: 17.08.2005
(73) Proprietor: Dometic AB, 562 28 Norrhammar (SE)
(72) Inventor: HEGMEGI, Zsolt, S-SE-571 32 Nässjö (SE)
(74) Representative: Wennborg, Johan
(86) International application number: PCT/SE2003/001804
(87) International publication number: WO 2004/048276

(56) References cited:
- US-A- 5 738 780

## Description

### Field of the Invention

The present invention relates to a method for purifying liquid comprising: passing liquid through a purification chamber and activating a UV light source for lighting up, which UV light source contains a gas and is arranged in the purification chamber, illuminating the liquid in the tube with UV light by means of the UV light source when this is lit up. The invention also relates to a liquid purifier for carrying out the method. The method and the liquid purifier are particularly suitable to be used for water purification in caravans, campers, households and other similar applications.

### Background art

In for example campers, there is a need to carry and store water for domestic requirements. The water is normally stored in a storage tank, which contains the normal requirements for anything from a couple of days up to several weeks. However, it is common for at least some of the quantity of water to remain in the tank for a considerably longer period of time, for example if the tank is not emptied completely and cleaned before each refill. Such long-term storage can give rise to the growth of micro-organisms which can be harmful to the user, particularly if the water is used as drinking water. Tests have shown that water which is stored for a week in the storage tank of a camper exceeds the guidelines of the Swedish National Food Administration relating to the presence of micro-organisms in drinking water by a factor of 28. Therefore the water supply system may be equipped with a water purifier, which is connected in series between the storage tank and the tapping points. In such a case, the water supply system can comprise a storage tank, a pump, a water purifier, a water heater and one or more tapping points in the form, for example, of faucets. One type of water purifier comprises a filter which is connected via a reducing valve to a UV-light purifier, which comprises a purification chamber with a UV light source and a water pipe, for example a quartz glass tube, which allows UV light to pass through.

When a user wants to draw off water, he or she must first ensure that the UV light source is shining with sufficient intensity. Thereafter the user can start the pump.

This is carried out either by the user opening the faucet at a tapping point, whereupon a pressure sensor in the system or an automatic switch in the faucet starts the pump, or, alternatively, the pump can be started manually by a switch at the tapping point. When the pump starts, water is pumped from the tank to the water purifier, where it first passes through the filter with active carbon to filter off solid impurities, chlorine, smell and taste. From the filter, the water is taken via the reducing valve to the purification chamber. In the purification chamber, the water is passed through a quartz glass tube which is arranged parallel to a UV fluorescent tube. A reflector is normally arranged parallel to the longitudinal axis of the quartz glass tube and the UV fluorescent tube, surrounding these elements, so that the UV light is focused towards the central longitudinal axis of the quartz glass tube, as described, for example, in WO 96/33135. When the water passes through the quartz glass tube, it is illuminated by the UV light, whereby the micro-organisms that have passed through the filter are exposed to UV radiation. This affects certain molecular structures in the micro-organisms, whereupon these die or at least are made harmless for a period of time. When the water has passed through the quartz glass tube, it is taken out of the purification chamber and, if required via a heater, to the tapping point.

In order to ensure that sufficiently many or all the micro-organisms are destroyed or made harmless, it is important that the dose of UV radiation to which they are exposed is sufficiently high. The dose of radiation depends upon the intensity of the UV radiation and the flow of liquid through the quartz glass tube, so that the dose increases with higher intensity and reduces with higher flow. As the user-criteria lay down requirements for a particular minimum flow, it is important that the UV intensity is kept sufficiently high in order to ensure that there is sufficient destruction of micro-organisms.

The most common type of UV light source in the water purifiers described above consists of a so-called UV fluorescent tube. These comprise an elongated cylindrical glass tube containing a gas, normally rarefied argon gas with mercury vapour. At each end of the tube there is an electrode. Further, the electrodes are connected to a time-controlled relay or a glow switch and to a voltage source. When the UV fluorescent tube is activated for lighting up, the voltage source is connected and the relay closes, so that a current goes from the voltage source to one electrode, through the closed relay and through the second electrode back to the voltage source. As the electrodes have a certain resistivity, they heat up during this short activation phase for lighting up the UV fluorescent tube. After a short time, normally around 0.1 - 1.0 seconds, the relay drops out. One electrode, the cathode, has then started to glow. The voltage is still passing across the electrodes and the cathode will hereby emit electrons that move freely through the glass tube to the second electrode, the anode. When the electrons move freely through the tube, they collide with gas molecules, whereupon radiation in the form of UV light starts to be emitted, that is to say the fluorescent tube lights up.

A problem with the use of such UV fluorescent tubes in water purifiers is that the fluorescent tube does not attain its full radiation intensity until the gas has reached a certain temperature, normally around 30-40°C. In particular in mobile applications for water purifiers, such as in caravans and campers, this is a problem, as the surrounding temperature can be very low. It is true that the gas and the electrodes are heated up by the heat that is generated when the fluorescent tube is shining, but if the surrounding temperature is, for example, 5°C when the UV fluorescent tube is activated for lighting up, it can take several minutes before the fluorescent tube has reached even 80% of its full intensity. The problem hereby arises that the adequate destruction of micro-organisms cannot be ensured during the time that it takes for the gas to reach a temperature of around 30°C.

One attempt to solve this problem is to greatly over-dimension the UV fluorescent tube, so that, even with low surrounding temperatures, the initial intensity is sufficiently high to ensure adequate destruction of micro-organisms. This solution is, of course, not satisfactory, as when the UV fluorescent tube has reached optimal temperature it would then be operating with several hundred percent over-capacity and as both the price of the purifier and the running costs would increase considerably. Another attempt to solve the problem is to introduce a time-delay into the water supply system, so that the pump cannot be started until a certain time after the UV fluorescent tube has been activated. In order to ensure adequate destruction, even in use in cold climates, the time delay must be set to be several minutes, which has proved to be unacceptable to users or at least very annoying. Yet another attempt to find a solution is to let the UV fluorescent tube shine continuously with full intensity, even when the water supply system is not being used, in order to attempt to maintain a raised temperature. This solution is, however, impractical, as the energy consumption would be very high and the life of the UV fluorescent tube would be greatly reduced, resulting in frequent, expensive and complicated replacements of the fluorescent tube.

US 5,738,780 describes a water-treatment system in which a UV lamp is operated at full intensity when the water flows through the system and at a lower intensity when the system is not being used. By this means, it is said that the time to attain full intensity of the lamp is reduced. The system described in US 5,738,780 has, however, certain disadvantages. The lamp must be operated continuously, which means that an electrical current continuously passes through the lamp's filaments. This means that wear on the lamp increases and that its life is thereby reduced. In addition, the system described comprises no means for controlling the temperature in the lamp or in the purification chamber around the lamp. As described above, the time to attain full light intensity depends upon the temperature of the lamp. The system described in US 5,738,780 makes it possible for the lamp to attain full intensity relatively quickly when it is activated, provided that the surrounding temperature is sufficiently high. With low surrounding temperatures, however, the lamp will still be relatively cold in the low-intensity mode, for which reason the time to attain full intensity is prolonged.

An alternative UV source that can be used in water purifiers of the type described above is an induction lamp. Such lamps comprise a double-shell glass bulb with a metal in gaseous form between the shells. Inside the glass bulb is an inductor in the form of an electrical coil. When the inductor is supplied with high-frequency AC voltage, a magnetic field is induced, which causes the metal gas to emit UV light. The problems described above, which are associated with attaining optimal operating temperature, can also occur with the use of induction lamps.

### Brief disclosure of invention

An object of the present invention is therefore to achieve a method for purifying liquid according to the first paragraph of this description, which method in a simple and cost-effective way eliminates or greatly reduces the problems that arise as a result of the UV light source not attaining full intensity until the gas in the UV light source has reached a certain temperature.

This object is achieved by heating up the gas to a raised temperature relative to the surroundings outside the purification chamber by means of a heat-generating element which is arranged outside the UV light source, in a standby mode prior to the activation for lighting up. By means of this, it is possible, for example, to keep the gas in the UV light source continuously at approximately the optimal temperature, without the UV light source being lit up. The UV light source will then emit full intensity almost immediately after it has been lit up. In this way, it is ensured that there is sufficient destruction or rendering harmless of the micro-organisms in the first quantity of water that is drawn off from the water supply system, even if the pump is started immediately after or at the same time as the UV light source is activated for lighting up. At the same time, the life of the UV light source is not reduced, as it only needs to be lit up when the pump is working and water is being drawn off from the system.

According to an embodiment of the method, the gas in the UV light source is heated up using an electrical resistance, which is arranged in the purification chamber in such a way that heat from the resistance is transmitted to the gas in the UV fluorescent tube by radiation and convection through the air that surrounds the UV light source in the purification chamber. By this means, a simple solution is achieved, which is relatively cheap both to manufacture and to run.

According to a preferred embodiment of the method, the temperature in the purification chamber is measured continuously, while at the same time the heating up of the gas in the UV light source is regulated depending upon the measured temperature. By this means, it is ensured that the temperature of the gas in the UV light source can be kept within the optimal range irrespective of variations in the surrounding temperature. In addition, the temperature control results in improved running economy, as the heating is switched off or reduced if the surrounding temperature increases.

Another object of the invention is to achieve a liquid purifier for carrying out the method. The liquid purifier comprises a purification chamber, in which a tube through which water passes and a UV light source are arranged in such a way that the UV light source, when it is lit up, illuminates the water in the tube with UV light. The liquid purifier according to the invention is characterized by means for controlled heating up of the gas in the UV light source, which means comprises a heat-generating element which is arranged outside the UV light source. By controlled heating up of the gas in the UV light source is meant here that the temperature of the gas can be kept above a predetermined temperature irrespective of the temperature of the surroundings outside the purification chamber and irrespective of the heat generation that can occur in the UV light source when this is activated for lighting up and when it is shining.

According to an embodiment of the liquid purifier according to the invention, the means for controlled heating up comprises an electrical resistance which is arranged in the purification chamber in such a way that when it is supplied with an electrical current, it generates heat which is transmitted to the gas in the UV light source by radiation and convection in the air-filled purification chamber.

The liquid purifier may also comprise a temperature sensor which is arranged in the purification chamber in order to measure the temperature in the purification chamber. The sensor is connected to a control device which controls the resistance so that the temperature is kept within a predetermined range, irrespective of variations in the surrounding temperature and irrespective of any heat generated by the UV light source when this is shining.

In order to minimize the energy consumption, heat insulation may be arranged around the purification chamber. The heat insulation is suitably constructed of a material that has good heat-insulating properties and that is resistant to UV radiation. An example of such a material is expanded propene plastic, EPP.

### Description of drawings

An exemplified embodiment of the method and the liquid purifier according to the invention is described below, with reference to the attached figures in which:
Figure 1 shows schematically a water supply system which can be used, for example, in campers.
Figure 2 is a section through a UV-light purifier in a liquid purifier for carrying out the method according to the invention.
Figure 3 is a diagram showing how the UV light intensity varies over time in a liquid purifier according to the invention and in a liquid purifier according to current technology.

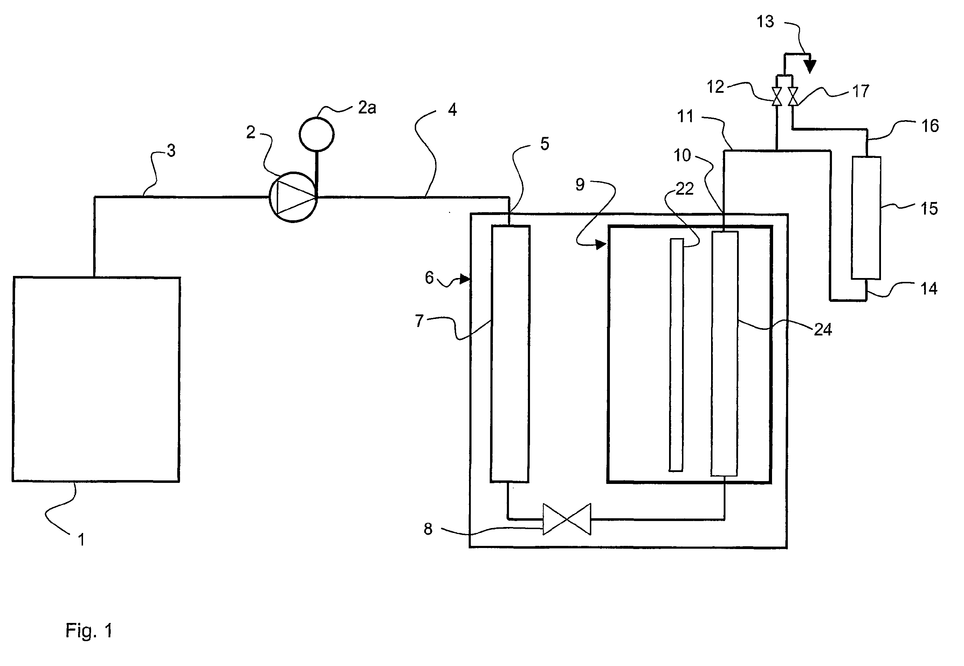

Figure 1 shows schematically a water supply system, for example for caravans, campers, boats, planes or any similar application, where the water for domestic requirements is carried in a storage tank 1. The water supply system comprises a pump 2, the suction side of which is connected to the storage tank 1 by a pipe 3. The pressure side of the pump 2 is connected via a pipe 4 to an inlet 5 of a water purifier 6. The water purifier 6 comprises a filter 7 which contains active carbon, a reducing valve 8 and a UV-light purifier 9 which will be described in greater detail below. An outlet 10 of the water purifier is connected to a cold water faucet 12 at a tapping point 13 via a pipe 11. The outlet 10 is also connected via a pipe 14 to a water heater 15 powered by electricity or bottled gas, which is connected to the hot water faucet 17 at the tapping point via a pipe 16. A pressure sensor 2a is connected to the pressure side of the pump in order to detect the liquid pressure in the system.

Alternatively, the pressure sensor 2a can be arranged in any other section of pipe between the pump 2 and the tapping point 13.

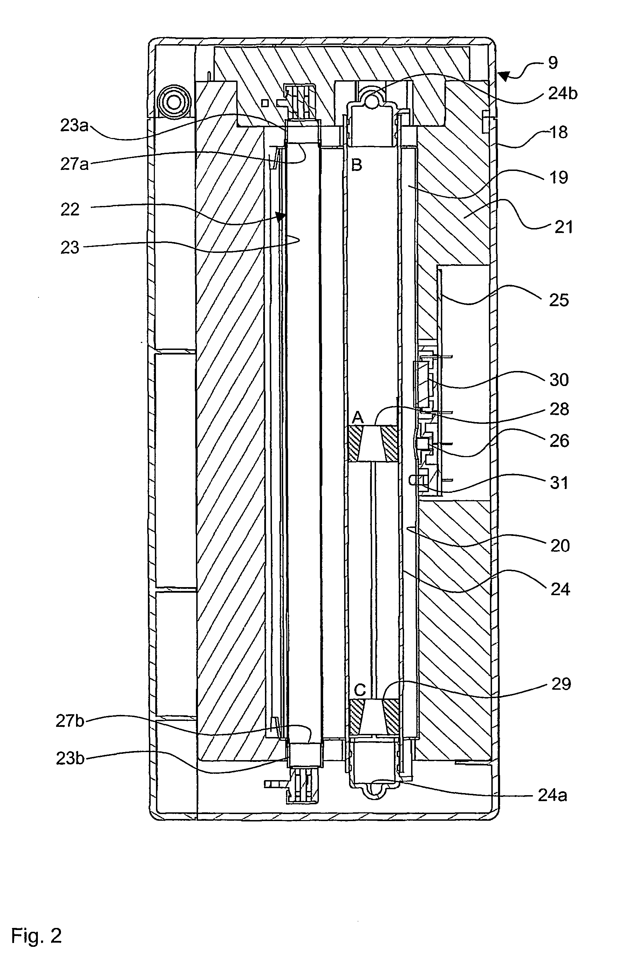

Figure 2 shows the UV-light purifier 9 which is incorporated in the water purifier 6. The UV purifier 9 comprises a casing 18 which is arranged around an elongated purification chamber 19 which is laterally delimited by a reflector 20. Heat insulation 21, for example of expanded propene plastic (EPP) or some other heat-insulating material, is arranged between the reflector 20 and the casing 18. A UV fluorescent tube 22 is arranged in the purification chamber 19, parallel to its longitudinal axis. The fluorescent tube 22 comprises a glass tube 23 which is filled with, for example, rarefied argon gas and mercury vapour. At one end 23a of the glass tube 23 there is an electrode 27 in the form of an anode 27a and at the other end 23b there is an electrode in the form of a cathode 27b. The anode 27a and the cathode 27b are connected to a time-controlled relay or a glow switch and a voltage source (not shown). A water pipe 24 is arranged in the purification chamber 19, parallel to its longitudinal axis and to the fluorescent tube 22. The water pipe 24 is made of a material that is water-tight but that passes through UV light. In the example shown, the water pipe consists of a quartz glass tube 24, but a thin-walled tube of teflon^{™} or other material may also be used. The quartz glass tube 24 has in addition an inlet 24a, which is connected to the filter 7 via a pipe and a reducing valve 8, and an outlet 24b which is connected to the tapping point 13 of the water supply system (see Figure 1). The reflector 20, the fluorescent tube 22 and the quartz glass tube 24 are arranged in such a way that the UV light from the fluorescent tube is reflected by the reflector 20 and is focused along the central longitudinal axis of the quartz glass tube. To make this possible, the reflector 20 and hence the purification chamber 19 have a generally elliptical cross section. The design of the reflector 20 and the position of the fluorescent tube 22 and the quartz glass tube 24 in the reflector are described in greater detail in WO 96/33135.

Immediately outside the purification chamber 19, essentially on a level with its centre, there is a circuit board 25. The circuit board carries components for monitoring and controlling the function of the UV purifier. These components are described in greater detail in the Swedish patent application entitled "System for supplying liquid" with the same applicant and filing date as the present patent application. The components comprise a UV-light sensor 26 for measuring the intensity of the UV fluorescent tube. The UV-light sensor 26 is attached to the circuit board 25 and arranged in such a way that it projects slightly into the purification chamber, through an opening in the reflector 20. During operation, the UV-light sensor 26 measures the UV intensity in the purification chamber 19. If the intensity drops, for example as a result of the UV fluorescent tube 22 being worn out, the output signal from the sensor 26 drops to a low level. This is detected by a microprocessor (not shown) on the circuit board, which stops the pump 2 and lights up a warning lamp or diode (not shown). The user then knows that the UV purifier is not working normally and that it needs attention. Instead of a UV-light sensor 26, a sensor for detecting visible light may be used. In such a case, the microprocessor carries out a conversion in order to calculate the UV light intensity on the basis of the measured intensity of the visible light.

Such sensors for detecting UV or visible light usually degenerate if they are subjected to long-term exposure to UV light. In order to shield the UV-light sensor 26 from UV radiation when the UV intensity does not need to be measured, a sensor shield 28 is arranged inside the quartz glass tube 24. The sensor shield 28 can move axially in the quartz glass tube between a lower position A where it shades the light sensor 26 from UV radiation and an upper position B where the UV light can freely radiate from the UV fluorescent tube 22 to the light sensor 26. When the pump 2 (Figure 1) is in operation, water is pumped through the quartz glass tube 24, whereupon the sensor shield 28 moves with the flow of water to the position B. The light sensor 26 can then measure the UV light intensity. When the pump 2 stops, the flow in the quartz glass tube 24 stops, whereupon the sensor shield 28 sinks down to the position A and shields the light sensor 26 from UV radiation when measurement of the intensity does not need to be carried out. The sensor shield 28 can also be used for indicating that the filter 7 is blocked. If the filter 7 is blocked, the flow through the quartz glass tube 24 is reduced, whereupon the sensor shield 28 sinks down to position A and blocks the UV radiation to the light sensor 26. The output signal from the light sensor 26 then drops to a low level, which is detected by the microprocessor, which stops the pump and lights up the warning lamp or diode.

A flow shield 29 can be arranged to move axially in the quartz glass tube 24 between a lower position C and the position A. The flow shield 29 is designed to be in the lower position C in the event of normal flow through the quartz glass tube 24. If the flow through the quartz glass tube 24 rises above the normal level for any reason, so that adequate destruction of micro-organisms cannot be guaranteed, the flow shield rises to position A where it shades the light sensor 26. The output signal from the light sensor 26 then drops to a low level, which is again detected by the microprocessor, which stops the pump and lights up the warning lamp or diode.

According to one embodiment of the liquid purifier according to the invention, the liquid purifier comprises a resistance 30 and a temperature sensor 31. The resistance 30 is attached to the circuit board 35 and arranged in such a way that it projects slightly into the purification chamber, through an opening that is made in the reflector 20. The resistance is connected to a voltage source (not shown) and is normally supplied with 12 or 24 V DC. With full voltage supply, the resistance generates around 1-10 W, preferably around 2-4 W heating effect. The task of the resistance is to heat up the gas in the UV fluorescent tube and to keep the temperature of the gas within the range at which the UV fluorescent tube produces the optimal radiation intensity. In certain applications, the optimal radiation intensity can be 100% of the maximum intensity, but it is more usual for the optimal radiation intensity to be around 80% of the maximum intensity of the UV light source. The temperature range of the gas within which the UV light intensity is around 80% of the maximum normally starts in excess of around 25°C and is usually in particular between around 30°C and 40°C. The heat from the resistance 30 is transmitted to the gas in the UV fluorescent tube 22 by radiation and convection through the air that surrounds the UV fluorescent tube in the purification chamber 19. As the resistance projects into the purification chamber, an effective heat transmission to the air and the UV fluorescent tube in the purification chamber is obtained when the resistance is in operation.

The temperature sensor 31 is also attached to the circuit board 25 and arranged in such a way that it projects slightly into the purification chamber 19, through an opening that is made in the reflector 20. The temperature sensor 31 and the resistance 30 are connected electrically via a regulating device (not shown) in such a way that the heating effect that is generated by the resistance 30 is controlled depending upon the air temperature in the purification chamber 19 which is measured by the temperature sensor 31. This can either be carried out by intermittent operation of the resistance 30, so that the resistance is supplied with a constant voltage as long as the temperature in the purification chamber is below a certain threshold value, for example 30°C, and the resistance 30 is not supplied when the temperature in the purification chamber 19 is above this value. Alternatively, the supply voltage for the resistance 30 can be varied in relation to the measured temperature in the purification chamber 19, so that the supply voltage and thereby the generated heating effect is reduced when the temperature rises and approaches for example 35°C and in a corresponding way is increased if the temperature drops below for example 30°C. After a certain period of heating up of the air in the purification chamber 19 and the gas in the UV fluorescent tube 22, the gas and the air will be approximately the same temperature. With continuous temperature monitoring and resultant controlled heating, the air temperature that is measured by the temperature sensor 31 will therefore also be valid for the temperature of the gas in the UV fluorescent tube 22.

For the use of the water supply system in, for example, a camper, the resistance 30 can be continuously connected to the voltage source via the regulating device, so that the temperature is kept constantly above for example 25°C and suitably between 30°C and 40°C, irrespective of the temperature of the surrounding atmosphere outside the purification chamber. The heating system is, however, suitably connected to the main switch of the vehicle, so that the heating is disconnected, for example when the camper is not used for a shorter or longer period of time.

With reference to Figures 1 and 2, it is described below how the embodiment of the invention described above is used. When a user wants to draw off water from the water supply system, he or she opens one or both faucets 12, 17 at the tapping point 13. The pressure sensor 2a in the system detects that the pressure drops, whereupon the pump is started and the UV fluorescent tube 22 is activated for lighting up. This activation for lighting up is carried out by means of either a time-controlled relay or a glow switch, in the normal way for fluorescent tubes. A voltage is applied to the UV fluorescent tube 22, across the relay or glow switch, the anode 27a and the cathode 27b. The relay or glow switch then closes, so that a current passes from the anode, via the relay or glow switch to the cathode. After a moment, the cathode 27b has started to glow and the relay or glow switch drops out. Electrons are then emitted from the cathode, whereupon the fluorescent tube 22 lights up. This activation phase for lighting up of the fluorescent tube lasts in the order of 0.1 - 1 second if a time-controlled relay is used and 1 to 3 seconds if a glow switch is used.

As the tecmperature of the gas in the UV fluorescent tube 22 has already been reached and maintained within the predetermined temperature range described above before the activation for lighting up of the fluorescent tube, the UV fluorescent tube will emit the optimal radiation intensity almost immediately after it has been lit up. By this means, it is ensured that the micro-organisms that are to be found in the quartz glass tube 24 right from the start are exposed to a sufficiently high dose of UV light to be destroyed or rendered harmless.

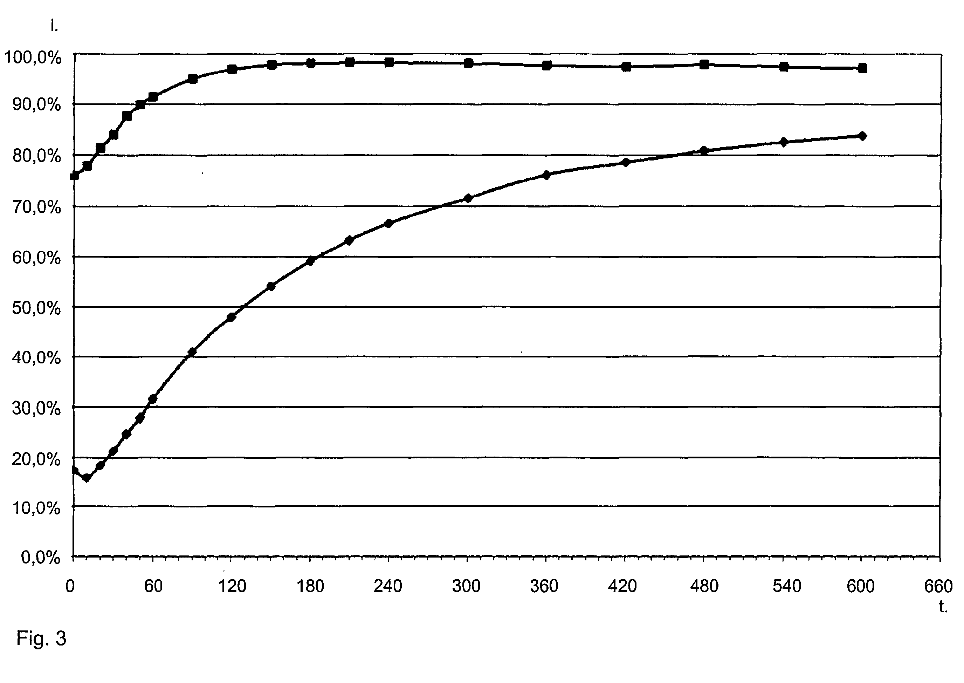

Figure 3 shows the result from a test that was carried out using a UV liquid purifier according to current technology and one according to the embodiment of the invention described above. Both liquid purifiers were identical with the exception of the liquid purifier according to the invention being provided with the system described above for heating the gas in the UV fluorescent tube. The diagram shows the intensity (l.) of the UV fluorescent tube as a percentage of the maximum intensity as a function of the time (t.) in seconds from the UV fluorescent tube being activated for lighting up. During the tests, the temperature of the surrounding atmosphere outside the purification chamber was 5°C. The lower curve shows the relationship for the conventional UV liquid purifier and the upper curve shows the relationship for the UV liquid purifier according to the invention.

The diagram shows that it took approximately 460 seconds before the UV light intensity in the conventional purifier reached 80% of the maximum intensity, while the corresponding time for the purifier according to the invention was less than 20 seconds. By means of the method and the liquid purifier according to the invention, it is thus significantly quicker to attain the UV light intensities that are required in order to ensure adequate destruction or rendering harmless of micro-organisms.

According to an alternative embodiment (not shown) of the liquid purifier according to the invention, the means for heating the gas in the UV fluorescent tube consists of a resistive heat-generating electrical cable which is wound in the form of a spiral around the glass tube of the UV fluorescent tube. This resistive cable can be connected to a temperature sensor and regulating device in a corresponding way to the resistance above and it also works in a corresponding way, with the exception that the heat generation takes place closer to the gas.

According to another embodiment (not shown), the means for heating the gas consists of the UV fluorescent tube's electrodes. In this case, the resistivity of the fluorescent tube's electrodes is used to heat the gas in the fluorescent tube. For this purpose, an electrical shorting of the fluorescent tube's time-controlled relay or glow switch is arranged so that a heating current can be passed through the electrodes for a longer period of time without the relay or glow switch dropping out and the fluorescent tube lighting up. During the activation phase for lighting up and during normal operation of the UV fluorescent tube after it has lit up, the UV fluorescent tube is normally operated with 50 V AC. The voltage that is used to heat the electrodes in the fluorescent tube according to the embodiment described here should, however, be approximately 12 V DC. For this reason, means must be arranged for supplying the fluorescent tube with 12 V DC during the heating up phase and with 50 V AC during the activation phase for lighting up and during normal operation. These means can, for example, consist of two different voltage sources with a change-over switch or with a transformer with two different supply outputs. When the heating current is passed through the UV fluorescent tube's electrodes, these generate heat inside the UV fluorescent tube, so that the gas in the glass tube is heated up. This way of heating up the gas can also be combined with a temperature sensor in the purification chamber, which indirectly measures the temperature of the gas and with a regulating device for controlling the heating depending upon the measured temperature.

The method and the liquid purifier according to the invention can also be used with corresponding effects and advantages in a liquid purifier where the UV light source consists of an induction lamp.

It is described above how the method and the liquid purifier are used in a camper or other vehicle. The invention can, however, also be used for other applications, such as stationary households, where the storage tank can be replaced by, for example, a well or a connection to a pressurized water supply network. In the latter case, the pump can be replaced by an electrically-controlled valve.

The time that the liquid purifier is in its standby mode, that is when the heating system is in operation, can vary between different applications. A continuous standby mode is described above. It is, however, also possible for the liquid purifier to assume its standby mode for shorter periods that can be controlled by, for example, the user or a timer. In such a case, it is important that the standby mode is assumed a sufficiently long time before the water is to be drawn off from the system, in order that the gas in the UV fluorescent tube can be heated to the predetermined temperature.

## Claims

1. Method for purifying liquid comprising:
passing liquid through a purification chamber (19),
activating a UV light source (22) for lighting up, which UV light source contains a gas and is arranged in the purification chamber,
illuminating the liquid in the purification chamber with UV light by means of the UV light source, when this is lit up,
**characterized by**
heating up the gas to a raised temperature in relation to the surroundings outside the purification chamber, in a standby mode prior to activation for lighting up, by means of a heat-generating element (30) which is arranged outside the UV light source.

2. Method according to Claim 1, wherein, in the standby mode, the gas is heated up by passing an electrical current through a resistive heat-generating element (30).

3. Method according to Claim 1 or 2, comprising measuring the temperature in the purification chamber (19) and controlling the heating up in relation to the measured temperature.

4. Method according to any one of Claims 1-3, wherein, in the standby mode, the gas is heated up to a temperature above 25°C, preferably between 30°C and 40 °C, and thereafter is maintained at essentially this temperature in the continued standby mode and after the UV light source (22) has been lit up.

5. Liquid purifier comprising a purification chamber (19), in which a tube (24) through which water passes and a UV light source (22) which contains a gas are arranged in such a way that the UV light source, when it is shining, illuminates the liquid in the tube with UV light, **characterized by** means for controlled heating up of the gas in the UV light source, which means comprises a heat-generating element (30) which is arranged outside the UV light source.

6. Liquid purifier according to Claim 5, in which the means for controlled heating up of the gas comprises a resistive heat-generating element (30), which is arranged in the purification chamber (19) outside the UV light source (22) for heating up the gas in the UV light source by radiation and convection in the purification chamber (19).

7. Liquid purifier according to Claim 5 or 6, in which the UV light source comprises a fluorescent tube, **characterized in that** the means for heating up the gas comprises a resistive electrical cable that is arranged around at least part of the outside of the fluorescent tube.

8. Liquid purifier according to any one of Claims 5-7, comprising a device (31) for measuring the temperature in the purification chamber (19), which device is connected to a regulating device for controlling the controlled heating up in relation to the measured temperature.

9. Liquid purifier according to any one of Claims 5-8, in which the purification chamber (19) is heat insulated.

## Patentansprüche

1. Verfahren zum Reinigen einer Flüssigkeit, aufweisend:
Hindurchführen einer Flüssigkeit durch eine Reinigungskammer (19),
Aktivieren einer UV-Lichtquelle (22) zum Einschalten, welche ein Gas enthält und in der Reinigungskammer angeordnet ist,
Bestrahlen der Flüssigkeit in der Reinigungskammer mit UV-Licht mit Hilfe der UV-Lichtquelle, wenn diese eingeschaltet ist,
**gekennzeichnet durch**
Erwärmen des Gases auf eine angehobene Temperatur im Verhältnis zu der Umgebung außerhalb der Reinigungskammer, in einem Standby-Modus vor der Aktivierung zum Einschalten, mit Hilfe eines Wärme erzeugenden Elementes (30), welches außerhalb der UV-Lichtquelle angeordnet ist.

2. Verfahren nach Anspruch 1, bei welchem im Standby-Modus das Gas erwärmt wird durch Hindurchführen eines elektrischen Stromes durch ein Wärme erzeugendes Widerstandselement (30).

3. Verfahren nach Anspruch 1 oder 2, aufweisend ein Messen der Temperatur in der Reinigungskammer (19) und ein Steuern des Erwärmens im Verhältnis zu der gemessenen Temperatur.

4. Verfahren nach irgendeinem der Ansprüche 1 bis 3, bei welchem in dem Standby-Modus das Gas auf eine Temperatur oberhalb von 25° C, vorzugsweise zwischen 30° C und 40° C erwärmt wird und anschließend im Wesentlichen auf dieser Temperatur im fortgesetzten Standby-Modus, und nachdem die UV-Lichtquelle (22) eingeschaltet worden ist, gehalten wird.

5. Flüssigkeitsreiniger, aufweisend eine Reinigungskammer (19), in welcher ein Rohr (24), durch welches Wasser hindurch tritt, und eine UV-Lichtquelle (22), welche ein Gas enthält, derart angeordnet sind, dass die UV-Lichtquelle, wenn sie leuchtend ist, die Flüssigkeit in dem Rohr mit UV-Licht bestrahlt, **gekennzeichnet durch** eine Einrichtung zum gesteuerten Erwärmen des Gases in der UV-Lichtquelle, welche ein Wärme erzeugendes Element (30) aufweist, welches außerhalb der UV-Lichtquelle angeordnet ist.

6. Flüssigkeitsreiniger nach Anspruch 5, in welchem die Einrichtung zum gesteuerten Erwärmen des Gases ein Wärme erzeugendes Widerstandselement (30) aufweist, welches in der Reinigungskammer (19) außerhalb der UV-Lichtquelle (22) zum Erwärmen des Gases in der UV-Lichtquelle durch Bestrahlung und Konvektion in der Reinigungskammer (19) angeordnet ist.

7. Flüssigkeitsreiniger nach Anspruch 5 oder 6, in welchem die UV-Lichtquelle eine fluoreszierende Röhre aufweist, **dadurch gekennzeichnet, dass** die Einrichtung zum Erwärmen des Gases ein elektrisches Widerstandskabel aufweist, welches um mindestens einen Teil der Außenseite der fluoreszierenden Röhre angeordnet ist.

8. Flüssigkeitsreiniger nach einem der Ansprüche 5 bis 7, aufweisend eine Vorrichtung (31) zum Messen der Temperatur in der Reinigungskammer (19), welche mit einer Steuervorrichtung zum Steuern des gesteuerten Erwärmens im Verhältnis zu der gemessenen Temperatur verbunden ist.

9. Flüssigkeitsreiniger nach einem der Ansprüche 5 bis 8, in welchem die Reinigungskammer (19) wärmeisoliert ist.

## Revendications

1. Procédé pour purifier un liquide, comprenant les étapes consistant à :
Faire passer un liquide à travers une chambre de purification (19),
Activer une source de lumière UV (22) pour l'allumer, laquelle source de lumière UV contient un gaz et est disposée dans la chambre de purification,
Eclairer le liquide dans la chambre de purification avec de la lumière UV au moyen de la source de lumière UV, lorsque celle-ci est allumée,
**caractérisé par**
le chauffage du gaz à une température élevée en rapport avec l'environnement extérieur à la chambre de purification, en mode d'attente avant activation pour l'allumage, au moyen d'un élément générateur de chaleur (30) qui est disposé à l'extérieur de la source de lumière UV.

2. Procédé selon la revendication 1, dans lequel, en mode de réserve, le gaz est chauffé en faisant passer un courant électrique à travers un élément résistif générateur de chaleur (30).

3. Procédé selon la revendication 1 ou 2, comprenant la mesure de la température dans la chambre de purification (19) et la commande du chauffage en rapport avec la température mesurée.

4. Procédé selon l'une quelconque des revendications 1 à 3, dans lequel, en mode d'attente, le gaz est chauffé jusqu'à une température supérieure à 25°C, de préférence de 30°C à 40°C, et est ensuite maintenu essentiellement à cette température en mode d'attente prolongée et après que la source de lumière UV (22) a été allumée.

5. Purificateur de liquide comprenant une chambre de purification (19), dans laquelle sont disposés un tube (24) à travers lequel passe de l'eau et une source de lumière UV (22) qui contient un gaz de sorte que la source de lumière UV, lorsqu'elle brille, éclaire le liquide dans le tube avec de la lumière UV, **caractérisé par** un moyen pour un chauffage controllé du gaz dans la source de lumière UV, lequel moyen comprend un élément générateur de chaleur (30) qui est disposé à l'extérieur de la source de lumière UV.

6. Purificateur de liquide selon la revendication 5, dans lequel le moyen pour le chauffage controllé du gaz comprend un élément résistif générateur de chaleur (30), qui est disposé dans la chambre de purification (19) à l'extérieur de la source de lumière UV (22) pour chauffer le gaz dans la source de lumière UV par rayonnement et convection dans la chambre de purification (19).

7. Purificateur de liquide selon la revendication 5 ou 6, dans lequel la source de lumière UV comprend un tube fluorescent, **caractérisé en ce que** le moyen pour chauffer le gaz comprend un câble électrique résistif qui est disposé autour d'au moins une partie de l'extérieur du tube fluorescent.

8. Purificateur de liquide selon l'une quelconque des revendications 5 à 7, comprenant un dispositif (31) pour mesurer la température dans la chambre de purification (19), lequel dispositif est raccordé à un dispositif de régulation pour contrôler le chauffage contrôlé par rapport à la température mesurée.

9. Purificateur de liquide selon l'une quelconque des revendications 5 à 8, dans lequel la chambre de purification (19) est thermoisolée.
